# EUROPEAN PATENT SPECIFICATION

(11) **EP 4 530 480 B1**
(45) Date of publication and mention of the grant of the patent: **27.08.2025**
(21) Application number: 23199935.0
(22) Date of filing: 27.09.2023
(51) Int. Cl.: F16B 5/02

(54) **CASTED COMPONENT FOR USE IN A PART OF A VEHICLE**
GEGOSSENES BAUTEIL ZUR VERWENDUNG IN EINEM FAHRZEUGTEIL
COMPOSANT COULÉ DESTINÉ À ÊTRE UTILISÉ DANS UNE PARTIE D'UN VÉHICULE

(43) Date of publication of application: 02.04.2025
(73) Proprietor: Volvo Car Corporation, 405 31 Göteborg (SE)
(72) Inventor: NORDENSTRÖM, Per, 40531 Göteborg (SE); KLINT, Freddy, 40531 Göteborg (SE)
(74) Representative: Maiwald GmbH

(56) References cited:
- EP-A1- 3 570 347
- DE-A1- 102009 035 487
- JP-A- 2011 134 554
- US-B2- 10 476 045

## Description

### TECHNICAL FIELD

The present disclosure relates to a casted component for use in a part of a vehicle, a set of such a component and a sleeve, a part of a vehicle and a vehicle.

### BACKGROUND ART

In the assembly of vehicle parts, such as battery packs, a guiding system is required that makes sure that components of the part are assembled correctly with one another. Further, the guiding system needs to enable the assembly of the respective components in a way that they stay in place when assembled.

Such guiding systems are often using holes and pins in the components respectively assembled with one another. This solution brings high cost and complexity to the assembly as it requires to design the components with the holes and pins.

Further, for some vehicle parts, there may be special requirements, e.g., they may benefit from or even require a fluid tight structure, which may be the case with batteries, for example. Introducing holes in components of such vehicle parts to guide the components thereof upon assembly is increasing the risk of leakage, which may be a critical problem when it comes to the safety of the vehicle and the lifetime of the battery.

EP3570347A1 describes a battery module capable, comprising: a plurality of cylindrical battery cells; a module housing having an accommodating part; a bus bar electronically connected to electrode terminals of at least two cylindrical battery cell; and a current collecting plate contacting with another current collecting plate , thereby electronically connected to a plurality of cylindrical battery cells of another battery module, wherein a guide coupling structure, including a coupling protrusion and a guiding groove, is formed to guide an arrangement location of another battery module on an outer surface of an external wall of the module housing.

JP2011134554A describes a battery module which comprises: a first battery; a first cap that covers a surface of the first battery and has a first fitting projection, said surface being provided with electrode terminals; a second battery; and a second cap that covers a surface of the second battery and has a second fitting recess, said surface being provided with electrode terminals. The first and second caps are arranged such that the first fitting projection and the first fitting recess are fitted to each other.

DE102009035487A1 describes a battery that has a heat conductive plate arranged in a battery case for controlling temperature of the battery. Multiple cells are electrically interconnected in parallel and/or series and heat-conductively connected with the heat conductive plate. The cells are arranged in recesses by a holding plate, and a supporting element is made of hardening material and attached in a gap among the cells and one of the recesses. The hardening material is thermoplastic, epoxy resin, polyurethane or silicone.

US 10476045B2 describes a battery cell assembly including an extruded case that provides an open area, and an electrode of a battery pack of an electrified vehicle, wherein the electrode is held within the open area.

### SUMMARY

The above disadvantages are at least partially relieved by the subject matter of the independent claims of the present disclosure, wherein further examples are incorporated in the dependent claims. The invention is defined by the claims.

According to a first aspect of this disclosure, there is provided a component for use in a part of a vehicle. The component may be comprising a guiding section configured for guiding the component relative to a sleeve when positioning the component inside the part of the vehicle. The guiding section may be comprising at least one guiding structure provided at a guiding side of the component. The at least one guiding structure may be comprising a groove extending at the guiding side and a protrusion adjacent to the groove. The protrusion may be protruding away from the groove. The groove and the protrusion may be extending substantially in parallel to each other along at least a portion of the guiding side.

The component is accordingly provided with a guiding capability that is leakage-proof as no holes and/or pins need to be introduced in the component. The component may be guided via its guiding section relative to the sleeve, which may be a further component for use in the part of the vehicle, when positioning the component inside the part of the vehicle. The at least one guiding structure, having the round groove and protrusion, provides for the guiding of the component. Specifically, by having the groove adjacent to the protrusion, the tolerances of the guiding section may be kept very tight, in particular a tolerance between the at least one protrusion and the sleeve, and specifically when the component is a casted component as discussed below.

In the sense of this disclosure, positioning relates to the task of positioning the component relative to the sleeve. Guiding relates to a subtask of the positioning process, assisting the positioning by means of the configuration of the guiding section relative to the sleeve such that the positioning is facilitated. Positioning does not include fixing or attaching the component and/or the sleeve to each other and/or other elements of the part, which may be a further step, in particular after the positioning has been carried out successful.

The component may be a casted component. This has the advantage of low manufacturing costs for the component. However, typically, casting the component requires a radius between the guiding side and the protrusion. This, however, may increase the clearance, specifically between protrusions of opposing guiding structures, and thereby create greater tolerances for guiding the component relative to the sleeve than desirable, which may result in a poor guiding. Providing the groove at the time of casting of the component removes the need for additional manufacturing steps, such as machining the groove into the component, to achieve tighter tolerances. Such additional manufacturing step would otherwise add further costs to the manufacturing process of the casted component. For manufacturing the casted component, liquid material may be poured into a mold, which may contain a hollow cavity of a desired shape of the component, and then allowed to solidify. The solidified component may consequently be ejected or broken out of the mold to complete the process and obtain the casted component. The material of the component may comprise or be a metal, e.g., steel or aluminum.

The protrusion may be directly adjacent to the groove. This may mean that there is no other portion of the component between the groove and the protrusion, e.g., a portion not being part of the protrusion and not of the groove. Instead, the protrusion and groove as portions of the component may be (directly) next to each other.

The groove may be a round groove. Accordingly, the groove may be at least partially rounded, e.g., having a partially circular, elliptical, or similar shape. This is particularly advantageous when casting the component such that no additional radius needs to be considered in the design of the component.

In an example, the component may comprise at least two guiding structures. Thereby, tight tolerances may be provided at both guiding structures, in particular at a space or clearance between these two, where the space or clearance may correspond in size to an outer diameter of the sleeve, e.g., substantially be equal or only slightly larger than the outer diameter of the sleeve.

In an example, two of the at least two guiding structures may be arranged in parallel to each other. The parallel guiding structures may further be arranged opposite of one another. Accordingly, the component may be guided by the sleeve via opposite and parallel protrusions of two guiding structures. The sleeve may, when guiding the component, be inserted in between the at least two guiding structures, specifically between their protrusions.

In an example, the component may be comprising at least three guiding structures. This further improves the guiding by adding yet another protrusion at the guiding side.

In an example, one of the guiding structures may be arranged substantially transverse or, in other words, orthogonal to at least another one of the guiding structures. Thereby, the sleeve may be introduced between a space formed in between the three or more guiding structures arranged with respect to each other.

In an example, the component may be configured for use in a battery as the part of the vehicle. For example, the component may be a battery component of the battery. Such battery component may, for example, be or comprise a battery cell or module or be configured as a structural component for structurally supporting a battery cell or module within the battery. For example, the component may be a bracket configured for connecting individual battery cells or battery modules with one another and/or to a structural component, e.g., a battery housing. The advantage of this is that a leakage in the battery may be avoided when using the component of this disclosure as opposed to a pin and hole guiding system.

In an example, the groove and the protrusion may be forming a substantially S-shaped guiding structure. This means that the protrusion and the groove both have a rounded shape, creating a double-rounded shape, which may, in the broadest sense, be identified as an S-shape. However, the protrusion may have a much greater extension in length or protrusion direction than a depth of the groove.

According to a second aspect of this disclosure, there is provided a set comprising the component of the first aspect of this disclosure and a sleeve. The sleeve may be configured such that the component can be guided relative to the sleeve by means of the guiding section of the component when positioning the component in the part of the vehicle.

The sleeve may comprise or be made from metal, e.g., steel or aluminum.

In an example, the sleeve may comprise a cylindrical body and a hole extending inside the cylindrical body, the cylindrical body comprising an end side, the guiding section and the sleeve being configured such that the component rests with its guiding side on the end side when the component is positioned inside the part of the vehicle. By having the guiding side rest on the end side, the positioning may be facilitated.

In an example, the guiding section and the sleeve may be configured such that the at least one protrusion is outside of the hole when the component rests on the sleeve. Thereby, the at least one protrusion may, from outside of the hole and overall sleeve, guide and consequently position the sleeve at the component and vice versa.

In an example, the component may be comprising at least two guiding structures, the guiding structures being spaced apart from one another such that the sleeve may be positioned in between the protrusions of the guiding structures for guiding the component relative to the sleeve.

In an example, the space between the protrusions may be substantially corresponding to an outer diameter of the sleeve. In other words, the space, in particular a clearance, between the respective protrusions may be formed substantially equal to the outer diameter of the sleeve or slightly larger than the outer diameter of the sleeve such that the sleeve may be inserted within the space substantially free of play. This may be achieved well with the tight tolerances of the component as described above and without having to provide for the tight tolerances with additional manufacturing steps, e.g., machining the component.

In an example, the sleeve may be comprising steel and the component may be comprising aluminum. Specifically, the sleeve may be made from steel and the component may be made from aluminum. Thereby, the set may be kept corrosion free in the assembly of the part.

According to a third aspect of this disclosure, there is provided a part of a vehicle comprising at least one set of the first aspect of this disclosure, the component of the at least one set being positioned relative to the sleeve of the at least one set.

The component may further be fixed in its positioning relative to the sleeve by any fixing means inside of the part (e.g., via a screw through sleeve and component). Also, the sleeve itself may be fixed inside of the part.

According to a fourth aspect of this disclosure, there is provided a vehicle comprising the part of the third aspect of this disclosure.

It is noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a perspective view of a set comprising a component and sleeve;
- Figure 2: shows a further perspective view of the set of Fig. 1;
- Figure 3: shows a bottom view of the set of Figs. 1 and 2;
- Figure 4: shows a side perspective view of the set of Figs. 1 to 3;
- Figure 5: shows a further side perspective view of the set of Figs. 1 to 4;
- Figure 6: shows a partial cross-sectional view of the set of Figs. 1 to 5;
- Figure 7: shows a further partial cross-sectional view of the set of Figs. 1 to 6; and
- Figure 8: shows a schematic view of a vehicle having a part comprising the set of Figs. 1 to 7.

### DETAILED DESCRIPTION

The Figures are merely schematic representations and serve only to illustrate examples of the disclosure. Identical or equivalent elements are in principle provided with the same reference signs.

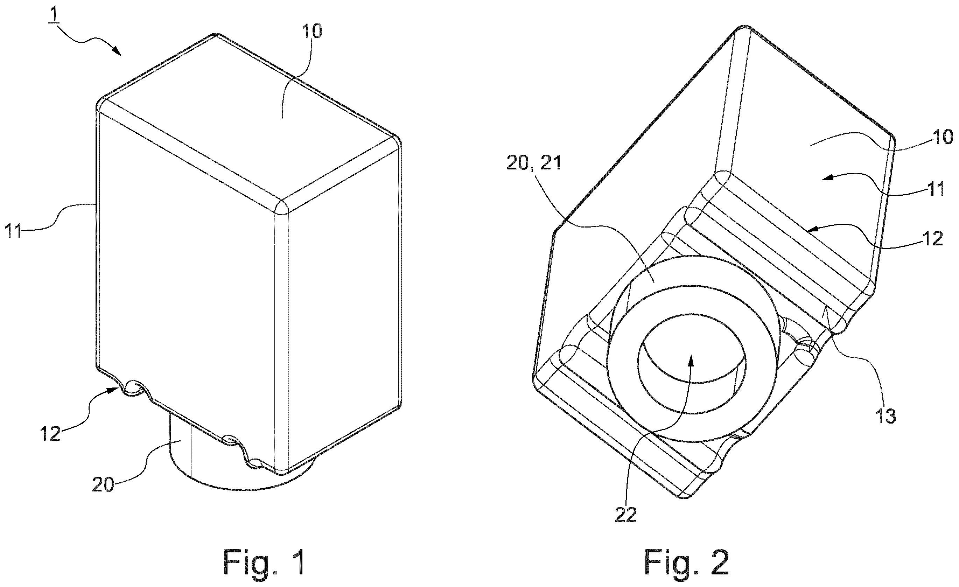

Figure 1 shows a set 1 comprising a component 10 and a sleeve 20. Here, the component 10 and the sleeve 20 are positioned with respect to each other. In particular, the component 10 and the sleeve 20 may be assembled with one another. In generally, the set 1 may have the component 10 and sleeve 20 as lose elements or positioned with respect to each other or even connected with one another, e.g., by any fixing means such as a screw.

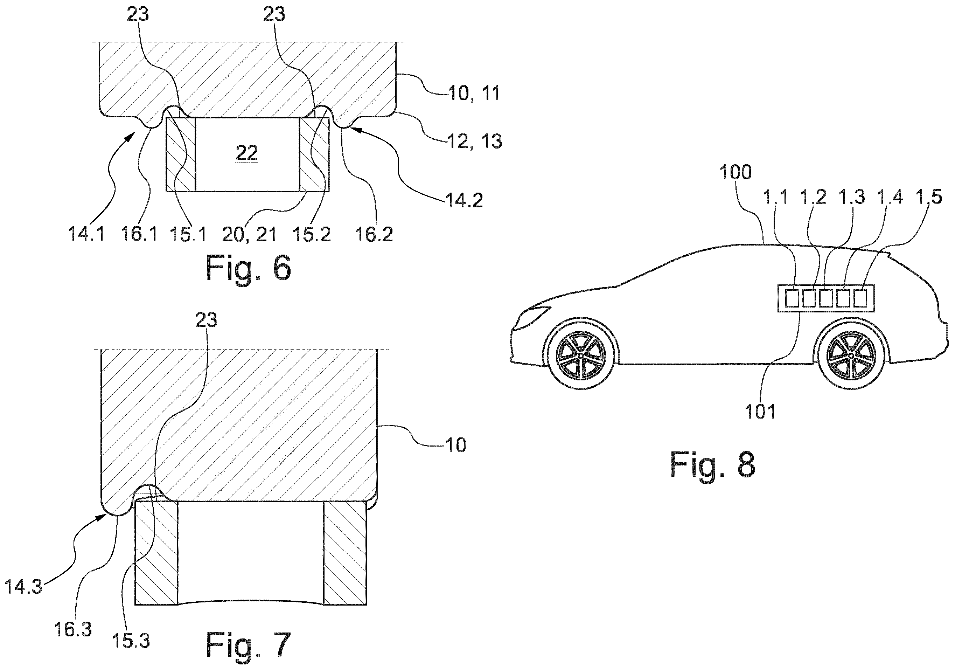

The component 10 and the sleeve 20 may be configured for use in a part 101 of a vehicle 100 (see Fig. 8), such as a battery pack, for example. In such an example, the component 10 and/or the sleeve 20 may be battery components. For example, the component 10 may be a bracket configured for connecting individual battery cells or battery modules to a structural component, e.g., a battery housing, in particular via or with assistance of the sleeve 20.

The component 10 is a casted component. Similarly, the sleeve 20 may be a casted sleeve 20. The component 10 has a component section 11 and a guiding section 12. The component section 11 may have one or more portions serving the function of the component, e.g., the function of a bracket. In Fig. 1, the component section 11 is simplified and shown as a block-like structure only.

The guiding section 12 is configured for guiding the component 10 relative to the sleeve 20 when positioning the component 10 inside the part 101 of the vehicle 100. In this example, the guiding section 12 is arranged at an end of the component 10. Further, the guiding section 12 is adjacent to the component section 11.

For the positioning of the component 10 in the part 101, the sleeve 20 may be already arranged in the part 101, in particular fixed therein or thereto. Therefore, the sleeve 20 may be used to guide the component 10 when positioning it inside the part 101.

Figure 2 shows the set 1, where the component 10 is seen in perspective from its end having the guiding section 12. The guiding section 12 is provided at a guiding side 13 of the component 10. The sleeve 20 has a cylindrical body 21 with a hole 22 extending therethrough.

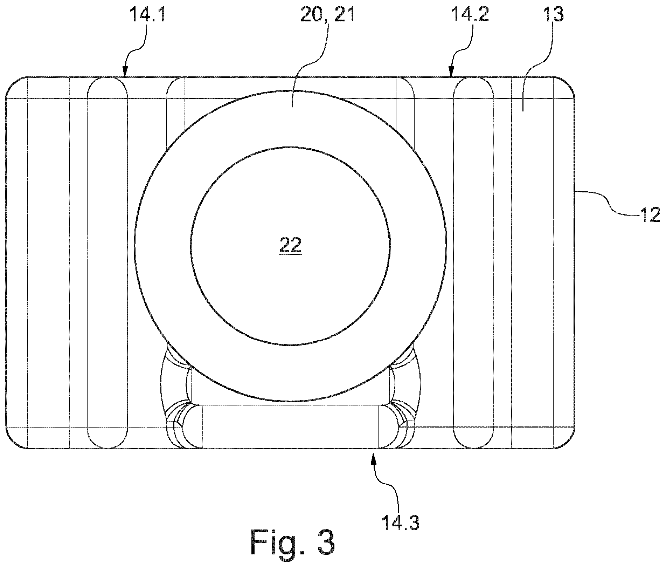

Figure 3 also shows the set 1, where the component 10 is seen from its end having the guiding section 12 or, in other words, from its guiding side 13. As may be seen from Fig. 3, the component 10 of this example comprises three guiding structures 14.1, 14.2, 14.3. The guiding structures 14.1, 14.2 are arranged opposite of one another and, in particular, in parallel to each other. The guiding structure 14.3 is positioned between the guiding structures 14.1, 14.2 and, in particular, transverse to the other guiding structures 14.1, 14.2. Alternatively, there may be only one or two of the guiding structures 14.1, 14.2, 14.3 as described herein, e.g., only the guiding structures 14.1, 14.2.

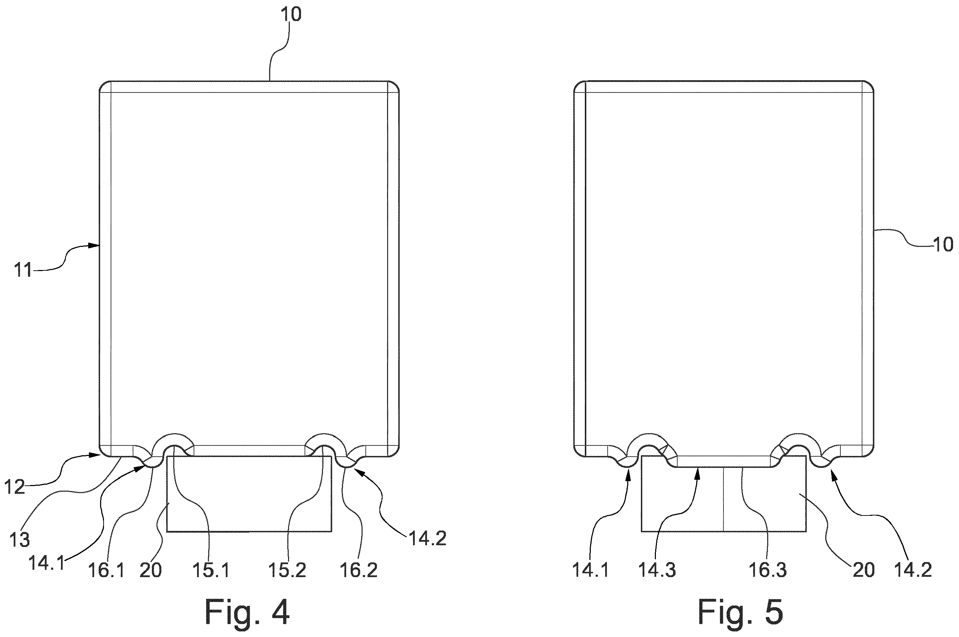

Figures 4 and 5 show the component 10 and sleeve 20 in different side perspectives. The perspective of Fig. 4 is such that the two guiding structures 14.1, 14.2 may be seen, whereas the perspective of Fig. 5 is such that all three guiding structures 14.1, 14.2, 14.3 may be seen. All guiding structures 14.1, 14.2, 14.3 are arranged at the guiding side 13. And each one of the guiding structures 14.1, 14.2, 14.3 comprises a respective groove 15.1, 15.2, 15.3 (see Fig. 7 for groove 15.3), which may be rounded, and a protrusion 16.1, 16.2, 16.3 extending from the guiding side 13.

An extension or, in other words, depth of the grooves 15.1, 15.2, 15.3 into or inside the component 10 at the guiding side 13 is opposite to the extension or, in other words, protrusion of the protrusions 16.1, 16.2, 16.3. Further, the respective grooves 15.1, 15.2, 15.3 and protrusions 16.1, 16.2, 16.3 are directly adjacent to each other in each one of the guiding structures 14.1, 14.2, 14.3.

By having the grooves 15.1, 15.2, 15.3 in the component 10, the space or clearance between the protrusions 16.1, 16.2, 16.3 may be designed as close as possible to corresponding to the outer diameter of the sleeve 20 for having tight tolerances when guiding the component 10 with its guiding structures 14.1, 14.2, 14.3 relative to the sleeve 20, in particular fitting the sleeve 20 in between the protrusions 16.1, 16.2, 16.3. Without the grooves 15.1, 15.2, 15.3, the corner or edge between the protrusions 16.1, 16.2, 16.3 and the guiding side 13 would have to be provided with a radius for casting the component 10. However, such radius requires a bigger clearance between the protrusions 16.1, 16.2, 163. The bigger clearance between the sleeve 20 and the protrusions 16.1, 16.2, 16.3 does not allow for having a positioning free of play as achieved by the grooves 15.1, 15.2, 15.3 adjacent to the protrusions 16.1, 16.2, 16.3.

As seen in Figs. 6 and 7, showing different cross-sectional views on a portion of the component 10 and the sleeve 20, the sleeve 20 is positioned between the protrusions 16.1, 16.2, 16.3. For illustrative purposes, a clearance between the protrusions 16.1, 16.2, 16.3 and the sleeve 20 may be larger than required. The component 10 rests with its guiding side 13 on the end side 23 of the sleeve 20.

Figure 8 shows a vehicle 100 having the part 101, in which several sets 1.1, 1.2, 1.3, 1.4, 1.5 as described above are being used. The part 101 may be a battery of the vehicle 100, for example. And the components 10 of each one of the sets 1.1, 1.2, 1.3, 1.4, 1.5 may be battery components or battery-related components, e.g., brackets for holding battery cells or modules of the battery.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. Any reference signs in the claims should not be construed as limiting the scope of the claims.

### LIST OF REFERENCE SIGNS

- 1: set
- 10: component
- 11: component section
- 12: guiding section
- 13: guiding side
- 14: guiding structure
- 15: groove
- 16: bulge
- 20: sleeve
- 21: cylindrical body
- 22: hole
- 23: end side
- 100: vehicle
- 101: part

## Claims

1. A casted component (10) for use in a part (101) of a vehicle (100), the component (10) comprising a guiding section (12) configured for guiding the component (10) relative to a sleeve (20) when positioning the component (10) inside the part (101) of the vehicle (100), the guiding section (12) comprising at least one guiding structure (14) provided at a guiding side (13) of the component (10), the at least one guiding structure (14) comprising a round groove (15) extending at the guiding side (13) **characterised by** a protrusion (16) directly adjacent to the groove (15) and protruding away from the groove (15), the groove (15) and the protrusion (16) extending substantially in parallel to each other along at least a portion of the guiding side (13).

2. The component (10) of claim 1, the component (10) comprising at least two guiding structures (14).

3. The component (10) of claim 2, two of the at least two guiding structures (14) being arranged in parallel to each other.

4. The component (10) of any one of the previous claims, the component (10) comprising at least three guiding structures (14).

5. The component (10) of claim 4, one of the guiding structures (14) being arranged substantially transverse to at least another one of the guiding structures (14).

6. The component (10) of any one of the previous claims, the component (10) being configured for use in a battery as the part (101) of the vehicle (100).

7. The component (10) of any one of the previous claims, the groove (15) and the protrusion (16) forming a substantially S-shaped guiding structure (14).

8. A set (1) comprising a component (10) of any one of the previous claims and a sleeve (20), the sleeve (20) being configured such that the component (10) can be guided relative to the sleeve (20) by means of the guiding section (12) of the component (10) when positioning the component (10) in the part (101) of the vehicle (100).

9. The set (1) of claim 8, the sleeve (20) comprising a cylindrical body (21) and a hole (22) extending inside the cylindrical body (21), the cylindrical body (21) comprising an end side (23), the guiding section (12) and the sleeve (20) being configured such that the component (10) rests with its guiding side (13) on the end side (23) when the component (10) is positioned inside the part (101) of the vehicle (100).

10. The set (1) of claim 9, the guiding section (12) and the sleeve (20) being configured such that the at least one protrusion (16) is outside of the hole (22) when the component (10) rests on the sleeve (20).

11. The set (1) of any one of claims 8 to 10, the component (10) comprising at least two guiding structures (14), the guiding structures (14) being spaced apart from one another such that the sleeve (20) may be positioned in between the protrusions (16) of the guiding structures (14) for guiding the component (10) relative to the sleeve (20).

12. The set (1) of claim 11, the space between the protrusions (16) substantially corresponding to an outer diameter of the sleeve (20).

13. The set (1) of any one of claims 8 to 12, the sleeve (20) comprising steel and the component (12) comprising aluminum.

14. A part (101) of a vehicle (100) comprising at least one set (1) of any one of claims 8 to 13, the component (10) of the at least one set (1) being positioned relative to the sleeve (20) of the at least one set (1).

15. A vehicle (100) comprising the part (101) of claim 14.

## Patentansprüche

1. Gegossenes Bauteil (10) zur Verwendung in einem Teil (101) eines Fahrzeugs (100), wobei das Bauteil (10) einen Führungsabschnitt (12) aufweist, der zum Führen des Bauteils (10) relativ zu einer Hülse (20) konfiguriert ist, wenn das Bauteil (10) innerhalb des Teils (101) des Fahrzeugs (100) positioniert wird, wobei der Führungsabschnitt (12) mindestens eine Führungsstruktur (14) aufweist, die an einer Führungsseite (13) des Bauteils (10) vorgesehen ist, wobei die mindestens eine Führungsstruktur (14) eine runde Nut (15) umfasst, die sich an der Führungsseite (13) erstreckt, **gekennzeichnet durch** einen Vorsprung (16), der direkt an die Nut (15) angrenzt und von der Nut (15) weg vorsteht, wobei sich die Nut (15) und der Vorsprung (16) im Wesentlichen parallel zueinander entlang mindestens eines Teils der Führungsseite (13) erstrecken.

2. Bauteil (10) nach Anspruch 1, wobei das Bauteil (10) mindestens zwei Führungsstrukturen (14) aufweist.

3. Bauteil (10) nach Anspruch 2, wobei zwei der mindestens zwei Führungsstrukturen (14) parallel zueinander angeordnet sind.

4. Bauteil (10) nach einem der vorhergehenden Ansprüche, wobei das Bauteil (10) mindestens drei Führungsstrukturen (14) aufweist.

5. Bauteil (10) nach Anspruch 4, wobei eine der Führungsstrukturen (14) im Wesentlichen quer zu mindestens einer anderen der Führungsstrukturen (14) angeordnet ist.

6. Bauteil (10) nach einem der vorhergehenden Ansprüche, wobei das Bauteil (10) zur Verwendung in einer Batterie als Teil (101) des Fahrzeugs (100) ausgebildet ist.

7. Bauteil (10) nach einem der vorhergehenden Ansprüche, wobei die Nut (15) und der Vorsprung (16) eine im Wesentlichen S-förmige Führungsstruktur (14) bilden.

8. Set (1), umfassend ein Bauteil (10) nach einem der vorhergehenden Ansprüche und eine Hülse (20), wobei die Hülse (20) derart ausgestaltet ist, dass das Bauteil (10) beim Positionieren des Bauteils (10) in dem Teil (101) des Fahrzeugs (100) mittels des Führungsabschnitts (12) des Bauteils (10) relativ zu der Hülse (20) geführt werden kann.

9. Set (1) nach Anspruch 8, wobei die Hülse (20) einen zylindrischen Körper (21) und ein sich im Inneren des zylindrischen Körpers (21) erstreckendes Loch (22) aufweist, wobei der zylindrische Körper (21) eine Stirnseite (23) aufweist, wobei der Führungsabschnitt (12) und die Hülse (20) so ausgebildet sind, dass das Bauteil (10) mit seiner Führungsseite (13) auf der Stirnseite (23) aufliegt, wenn das Bauteil (10) im Inneren des Teils (101) des Fahrzeugs (100) positioniert ist.

10. Set (1) nach Anspruch 9, wobei der Führungsabschnitt (12) und die Hülse (20) so ausgebildet sind, dass der mindestens eine Vorsprung (16) außerhalb des Lochs (22) liegt, wenn das Bauteil (10) auf der Hülse (20) aufliegt.

11. Set (1) nach einem der Ansprüche 8 bis 10, wobei das Bauteil (10) mindestens zwei Führungsstrukturen (14) aufweist, wobei die Führungsstrukturen (14) derart voneinander beabstandet sind, dass die Hülse (20) zwischen den Vorsprüngen (16) der Führungsstrukturen (14) zur Führung des Bauteils (10) relativ zur Hülse (20) positioniert werden kann.

12. Set (1) nach Anspruch 11, wobei der Abstand zwischen den Vorsprüngen (16) im Wesentlichen einem Außendurchmesser der Hülse (20) entspricht.

13. Set (1) nach einem der Ansprüche 8 bis 12, wobei die Hülse (20) aus Stahl und das Bauteil (12) aus Aluminium besteht.

14. Teil (101) eines Fahrzeugs (100) mit mindestens einem Set (1) nach einem der Ansprüche 8 bis 13, wobei das Bauteil (10) des mindestens einen Sets (1) relativ zur Hülse (20) des mindestens einen Sets (1) angeordnet ist.

15. Fahrzeug (100) mit dem Teil (101) nach Anspruch 14.

## Revendications

1. Composant moulé (10) destiné à être utilisé dans une pièce (101) d'un véhicule (100), le composant (10) comprenant une section de guidage (12) configurée pour guider le composant (10) par rapport à un manchon (20) lors du positionnement du composant (10) à l'intérieur de la pièce (101) du véhicule (100), la section de guidage (12) comprenant au moins une structure de guidage (14) prévue sur un côté de guidage (13) du composant (10), l'au moins une structure de guidage (14) comprend une rainure ronde (15) s'étendant sur le côté de guidage (13) **caractérisée par** une protubérance (16) directement adjacente à la rainure (15) et faisant saillie à l'écart de la rainure (15), la rainure (15) et la protubérance (16) s'étendant sensiblement parallèlement l'une à l'autre le long d'au moins une partie du côté de guidage (13).

2. Le composant (10) de la revendication 1, le composant (10) comprenant au moins deux structures de guidage (14).

3. Le composant (10) de la revendication 2, deux des au moins deux structures de guidage (14) étant disposées parallèlement l'une à l'autre.

4. Le composant (10) de l'une quelconque des revendications précédentes, le composant (10) comprenant au moins trois structures de guidage (14).

5. Le composant (10) de la revendication 4, l'une des structures de guidage (14) étant disposée sensiblement transversalement à au moins une autre des structures de guidage (14).

6. Le composant (10) de l'une quelconque des revendications précédentes, le composant (10) étant configuré pour être utilisé dans une batterie en tant que partie (101) du véhicule (100).

7. Le composant (10) de l'une quelconque des revendications précédentes, la rainure (15) et la protubérance (16) formant une structure de guidage (14) sensiblement en forme de S.

8. Ensemble (1) comprenant un composant (10) de l'une quelconque des revendications précédentes et un manchon (20), le manchon (20) étant configuré pour que le composant (10) puisse être guidé par rapport à le manchon (20) au moyen de la section de guidage (12) du composant (10) lors du positionnement du composant (10) dans la partie (101) du véhicule (100).

9. L'ensemble (1) de la revendication 8, le manchon (20) comprenant un corps cylindrique (21) et un trou (22) s'étendant à l'intérieur du corps cylindrique (21), le corps cylindrique (21) comprenant un côté d'extrémité (23), la section de guidage (12) et le manchon (20) étant configurés pour que le composant (10) repose avec son côté de guidage (13) sur le côté d'extrémité (23) lorsque le composant (10) est positionné à l'intérieur de la partie (101) du véhicule (100).

10. L'ensemble (1) de la revendication 9, la section de guidage (12) et le manchon (20) étant configurés pour que la au moins une protubérance (16) soit à l'extérieur du trou (22) lorsque le composant (10) repose sur le manchon (20).

11. L'ensemble (1) de l'une quelconque des revendications 8 à 10, le composant (10) comprenant au moins deux structures de guidage (14), les structures de guidage (14) étant espacées l'une de l'autre de manière à ce que le manchon (20) puisse être positionné entre les protubérances (16) des structures de guidage (14) pour guider le composant (10) par rapport au manchon (20).

12. L'ensemble (1) de la revendication 11, l'espace entre les protubérances (16) correspondant sensiblement à un diamètre extérieur du manchon (20).

13. L'ensemble (1) de l'une quelconque des revendications 8 à 12, le manchon (20) étant en acier et le composant (12) en aluminium.

14. Pièce (101) d'un véhicule (100) comprenant au moins un ensemble (1) de l'une quelconque des revendications 8 à 13, le composant (10) de l'au moins un ensemble (1) étant positionné par rapport au manchon (20) de l'au moins un ensemble (1).

15. Véhicule (100) comprenant la pièce (101) de la revendication 14.
